# EUROPEAN PATENT APPLICATION

(11) **EP 4 574 540 A1**
(43) Date of publication of application: **25.06.2025**
(21) Application number: 23854667.5
(22) Date of filing: 14.02.2023
(51) Int. Cl.: B60L 53/14, B60L 50/60, B60L 58/10, H02J 7/00

(54) **ELECTRIC WORK VEHICLE**

(30) Priority: 19.08.2022 JP 2022130930
(71) Applicant: Kubota Corporation, Osaka 556-8601 (JP)
(72) Inventor: TAKASE Shunya, Sakai-shi, Osaka 590-0908 (JP)
(74) Representative: Müller-Boré & Partner Patentanwälte PartG mbB
(86) International application number: PCT/JP2023/004876
(87) International publication number: WO 2024/038627

(57) **Abstract**

An electric work vehicle includes: a control state switcher (35) configured to switch a control unit to an operating state in response to a first operation on a manual operation device, and switch the control unit to a resting state in response to a second operation on the manual operation device; and a charging controller (43) configured to control charging of the battery, wherein the control unit includes: a motor controller (61) configured to control driving of an electric motor (1); a mode setter (62) configured to set a charging mode to enable charging of the battery, and a work mode to enable driving of the electric motor (1); a start prohibitor (63) configured to prohibit starting of the electric motor (1) after charging has ended; and a start prohibition releaser (64) configured to release the prohibition of starting.

## Description

### Technical Field

The present invention relates to an electric work vehicle configured to be driven by power of an electric motor powered from a chargeable battery.

### Background Art

In an electric work vehicle of this kind, as described in, for example, Patent Document 1, when the electric power of the battery has been consumed, the battery is connected to an external power feeding device via a connection port, and is charged by the electric power supplied from the power feeding device. Since the time required to charge the battery exceeds one hour, the driver (manager) may leave the charging location during charging. In such a case, the electric work vehicle may be stolen.

It is common that a plug-in vehicle is parked in a charging station provided along a road or the like, and charging of the battery is performed in the station. For example, in a plug-in vehicle management system described in Patent Document 2, the plug-in vehicle is provided with an intrusion sensor and a camera, and the charging station is provided with an image monitor. When the intrusion sensor has detected an unauthorized operation performed on the plug-in vehicle, an image captured by the camera is displayed on the image monitor. This enhances the security in the charging station during charging of the battery.

### Prior Art Documents

### Patent Documents

Patent Documents 1: JP 2021-000957A
Patent Documents 2: JP 2010-182239A

### Disclosure of the Invention

### Problem to be Solved by the Invention

Charging stations that can be used by electric work vehicles are less prevalent. Considering nighttime image capturing for which lighting is required, providing an electric work vehicle with an antitheft camera or the like that functions during charging gives rise to environmental and cost problems. In view of such circumstances, there is desired an electric work vehicle for which security, such as theft prevention, during charging of the battery has been effectively enhanced.

### Means for Solving Problem

An electric work vehicle according to the present invention is configured to be driven by power of an electric motor powered from a chargeable battery, and includes: a control unit configured to control the electric work vehicle; a control state switcher configured to switch the control unit to an operating state in response to a first operation (e.g., ON operation) on a manual operation device, and switch the control unit to a resting state in response to a second operation (e.g., OFF operation) on the manual operation device; a charging power connector configured to receive charging power to be supplied to the battery; and a charging controller configured to control charging of the battery with the charging power, wherein
the control unit includes: a motor controller configured to control driving of the electric motor; a mode setter configured to set a charging mode to enable charging of the battery, and a work mode to enable driving of the electric motor; a start prohibitor configured to prohibit starting of the electric motor after charging has ended; and a start prohibition releaser configured to release the prohibition on starting of the electric motor.

With this configuration, even when charging of the battery has ended, starting of the electric motor is prohibited by the start prohibitor. Therefore, the electric motor will not start unless the prohibition on starting is released. This eliminates the disadvantage that the electric work vehicle for which charging of the battery has ended is operated and stolen by a third party.

The prohibition on starting of the electric motor by the start prohibitor must be released by an authorized driver (manager) of the electric work vehicle. The releasing operation is preferably as easy as possible for the authorized driver of the electric work vehicle. Accordingly, in the present invention, the prohibition on starting by the start prohibitor is released by an operation into the first operation on the manual operation device. It is advantageous that the manual operation device is also used as an operation key required for an operation (e.g., opening of a door) to enable riding in the electric work vehicle.

In one embodiment, charging is started by a charging start instruction being issued by operating the manual operation device under the charging mode setting. In such an embodiment, even in a case where a charging start instruction has been issued, it is deemed that some abnormality has occurred in a case where charging of the battery is not started. Therefore, in such a case, it is preferable that the control unit is powered off. Accordingly, in one embodiment, the control unit is powered off in a case where charging of the battery is not started within a predetermined time (e.g., within 1 minute) after a charging start instruction has been provided during the charging mode.

If the second operation state (OFF state) using the manual operation device is maintained when charging of the battery has ended, it is deemed that the control system does not need to be operated at least for a while. Therefore, it is preferable to power off the control unit from the viewpoint of energy saving and theft prevention. Accordingly, in the present invention, the control unit is powered off in a case where a state of the second operation using the manual operation device is maintained after charging of the battery has ended.

If the control system is in the operating state when charging of the battery has ended, there is the possibility that the control system is immediately required to be operated. Therefore, it is preferable that the operating state is maintained for a while, and the control unit is powered off after an elapse of a predetermined time. Accordingly, in the present invention, the control unit is powered off after an elapse of a predetermined time (e.g., after 1 minute) in a case where a state (e.g., ON state) of the first operation using the manual operation device is maintained after charging of the battery has ended.

The electric motor may not become startable even in a case where a motor start instruction to the electric motor is issued using the manual operation device in such a manner as to enable controlling of the travel of the control system of the control unit in the work mode to enable traveling of the electric work vehicle. In such a case, it is deemed that a problem has occurred, for example, in the control unit and. For this reason, in order to avoid any disadvantage caused by such a problem, in the present invention, the control unit is powered off after an elapse of a predetermined waiting time in a case where the electric motor does not transition to a starting state after a motor start instruction has been provided in the work mode.

In a case where the electric motor has stopped due to occurrence of an error, it is necessary to prevent damage and the like to the control system including the control unit as a core. Accordingly, in the present invention, the control unit is powered off in a case where the electric motor is stopped due to occurrence of an error.

As a preferred embodiment of the present invention, the control unit causes the electric motor to enter a stopped state in response to a power feeding line from a power feeding device being connected to the charging power connector. This obviates the disadvantage that the electric motor is inadvertently operated during charging of the battery.

For charging of the battery that is performed after the charging power connector has been connected to the power feeding line, it is necessary to set the charging mode. Preferably, the setting of the charging mode is performed through a conscious operation performed by the driver. Accordingly, in one embodiment of the present invention, the charging mode is set by the charging power connector being connected for charging, and the manual operation device being operated from a state of the second operation into the first operation.

### Brief Description of the Drawings

FIG. 1 is a left side view of a tractor.
FIG. 2 is a left side view showing an arrangement of a motor and a travel battery.
FIG. 3 is a schematic diagram showing a flow of power transmission.
FIG. 4 is a functional block diagram showing functional units of a battery system.
FIG. 5 is a chart illustrating an example of a flow in a control system.

### Best Mode for Carrying out the Invention

An embodiment for carrying out the present invention will be described with reference to the drawings. In the following description, unless particularly specified otherwise, the arrow F shown in the drawings indicates the "forward direction", the arrow B indicates the "rearward direction", the arrow L indicates the "leftward direction", and the arrow R indicates the "rightward direction". The arrow U shown in the drawings indicates the "upward direction", and the arrow D indicates the "downward direction".

### Overall Configuration of Tractor

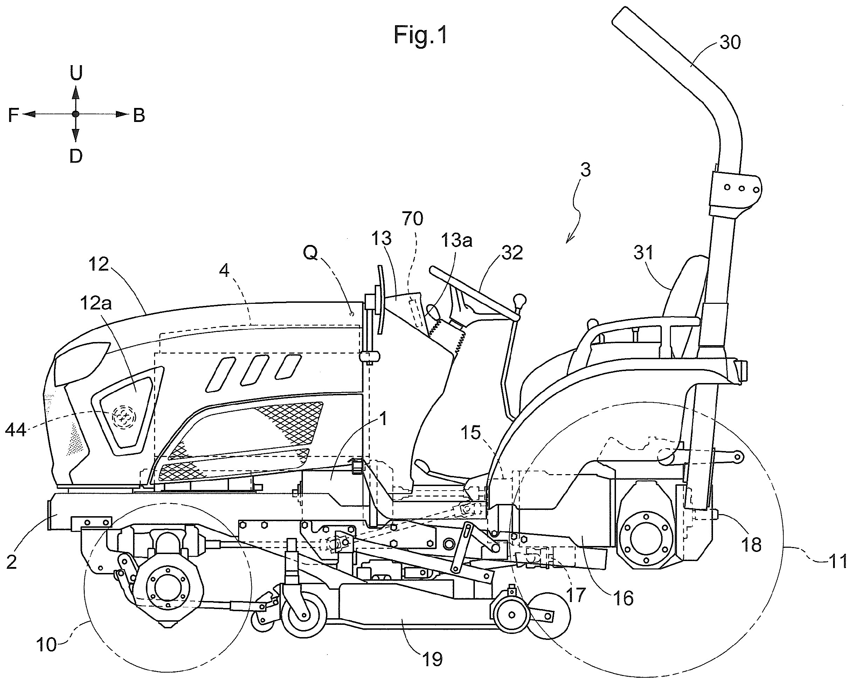

A tractor as an example of an electric work vehicle according to the present invention will be described below. As shown in FIG. 1, the tractor includes left and right front wheels 10, left and right rear wheels 11, and a cover member 12.

The tractor includes a body frame 2 and a driving section 3. The body frame 2 is supported by the left and right front wheels 10 and the left and right rear wheels 11. The cover member 12 is disposed at a front portion of the body. The driving section 3 is disposed rearward of the cover member 12.

The driving section 3 includes a protection frame 30, a driver's seat 31, and a steering wheel 32. The steering wheel 32 can be operated by a driver riding on the driving section 3 and seating in the driver's seat 31. The left and right front wheels 10 are steered by operating the steering wheel 32. A front panel 13 is provided forward of the driver's seat 31, and a part of the front panel 13 is formed as a meter panel 13a. A display unit 70 for notifying the driver of various types of information is incorporated in the meter panel 13a. The driver can perform various driving operations in the driving section 3.

The tractor includes a battery 4 serving as a travel battery. The cover member 12 is swingable to be opened and closed about an opening and closing axis Q extending in the left-right direction of the body. While the cover member 12 is closed, the battery 4 is covered by the cover member 12. On a left side surface of a front portion of the cover member 12, a charging cover 12a is provided in such a manner as to be swingable to be opened and closed. As a result of the charging cover 12a being opened, a charging power connector 44 to which a power feeding cable is inserted during charging is exposed.

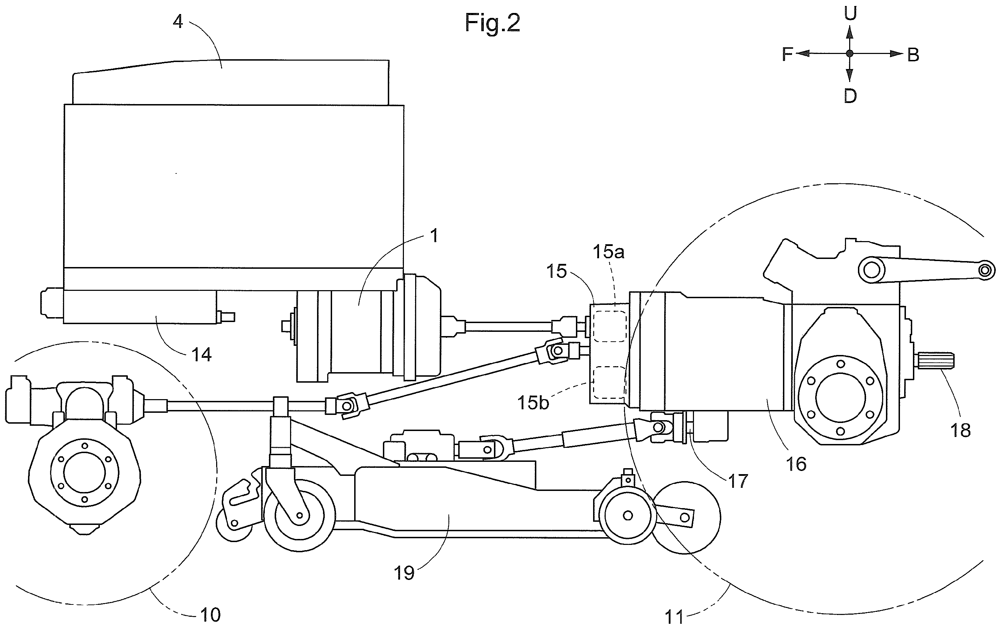

As shown in FIG. 2, the tractor includes an inverter 14 and an electric motor 1. The battery 4 supplies electric power to the inverter 14. The inverter 14 converts direct-current power supplied from the battery 4 into alternating-current power, thus generating driving power to be supplied to the electric motor 1. The driving power is the alternating-current power generated by the inverter 14.

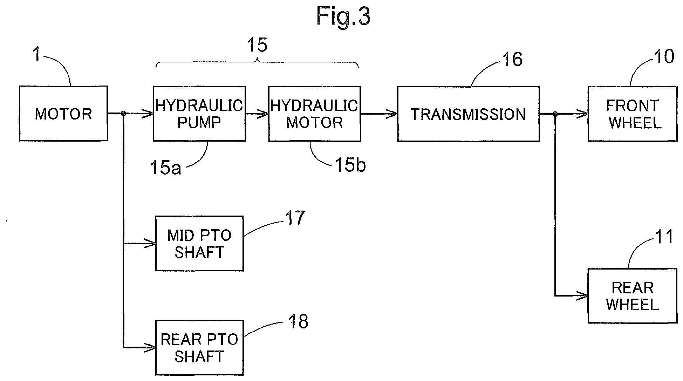

As shown in FIGS. 2 and 3, the tractor includes a hydrostatic continuously variable transmission device 15 and a transmission 16. As shown in FIG. 3, the hydrostatic continuously variable transmission device 15 includes a hydraulic pump 15a and a hydraulic motor 15b.

The hydraulic pump 15a is driven by rotational power supplied from the electric motor 1. As a result of the hydraulic pump 15a being driven, the rotational power is output from the hydraulic motor 15b. Note that the hydrostatic continuously variable transmission device 15 is configured in such a manner that the rotational power is changed in speed in a continuously variable manner between the hydraulic pump 15a and the hydraulic motor 15b.

The rotational power output from the hydraulic motor 15b is transmitted to the transmission 16. The rotational power transmitted to the transmission 16 is changed in speed by a geared transmission mechanism included in the transmission 16, and is distributed to the left and right front wheels 10 and the left and right rear wheels 11. Thus, the left and right front wheels 10 and the left and right rear wheels 11 are driven.

As shown in FIG. 3, the tractor includes a mid PTO shaft 17 and a rear PTO shaft 18. The rotational power output from the electric motor 1 is distributed to the hydraulic pump 15a, the mid PTO shaft 17, and the rear PTO shaft 18. Thus, the mid PTO shaft 17 and the rear PTO shaft 18 are rotated.

When a work device is connected to the mid PTO shaft 17 or the rear PTO shaft 18, the work device is driven by the rotational power of the mid PTO shaft 17 or the rear PTO shaft 18. For example, in the present embodiment, a mowing device 19 is connected to the mid PTO shaft 17 as shown in FIG. 2. The mowing device 19 is driven by the rotational power of the mid PTO shaft 17.

### Configuration of Motor and Battery Control System

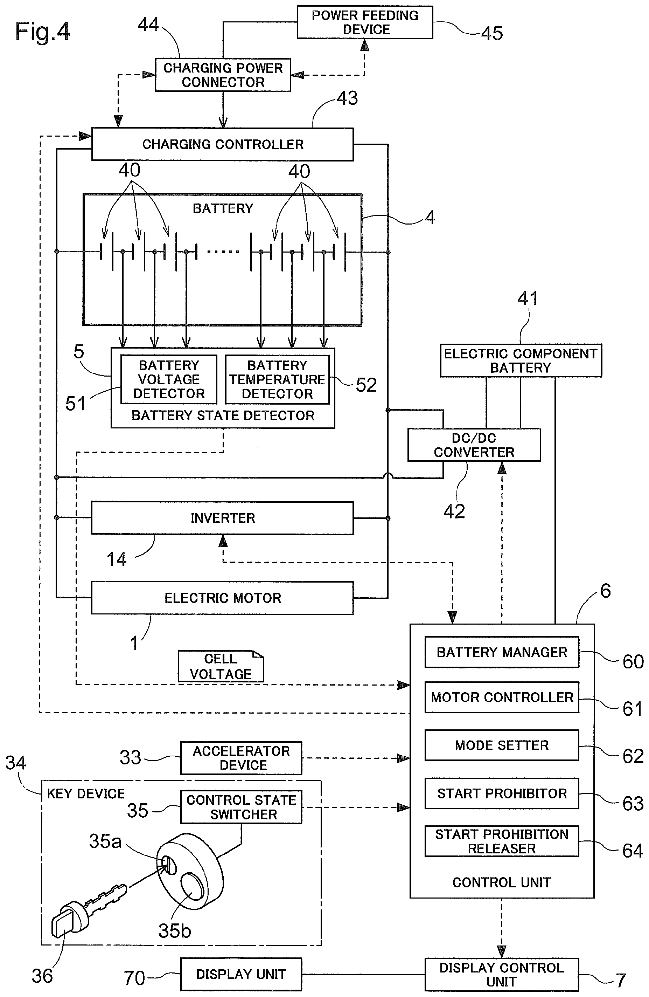

FIG. 4 schematically shows a configuration relating to control of the battery 4 and the electric motor 1. The motor and battery control system includes an accelerator device 33, a key device 34, a control unit 6, and an inverter 14. The control unit 6 controls the operation of the electric motor 1. The accelerator device 33 is provided in the vicinity of the steering wheel 32. Although the structure of the accelerator device 33 is not shown, the accelerator device 33 includes a swingably operable lever , and a potentiometer configured to be operated by the swinging operation of the lever. The accelerator device 33 is connected to the control unit 6.

The key device 34 is also connected to the control unit 6. The key device 34 is provided on the front panel 13, and is configured to perform an ON operation and an OFF operation on the control unit 6. In this embodiment, the key device 34 is composed of a control state switcher 35 and a portable operation key 36. An insertion portion 35a to which the operation key 36 configured to be inserted and mounted, and a push-button switch 35b configured to be manually pushed are attached to the control state switcher 35. The operation key 36 and the switch 35b function as a manual operation device of the present invention. In this embodiment, a pressing operation on the switch 35b while the operation key 36 is inserted and mounted to the insertion portion 35a is regarded as a first operation (ON operation) on the manual operation device. In addition, a further pressing operation on the switch 35b while the operation key 36 is inserted and mounted to the insertion portion 35a is regarded as a second operation (OFF operation) on the manual operation device. In response to the first operation on the manual operation device, the control state switcher 35 sends a switching signal for switching the control unit 6 to an operating state (powered-on state: ON state) to the control unit 6. In response to the second operation on the manual operation device, the control state switcher 35 sends a switching signal for switching the control unit 6 to a resting state (powered-off state: OFF state) to the control unit 6. Note that, similarly to a general vehicle key, the operation key 36 functions as a key that can be identified only by the work vehicle.

The control unit 6 is further connected to the inverter 14, and provides a drive instruction to the inverter 14 in response to an instruction provided by the accelerator device 33. In response to the instruction provided by the control unit 6, the inverter 14 adjusts the electric power supplied from the battery 4 to the electric motor 1 and controls the output of the electric motor 1.

The control unit 6 is also connected to the display control unit 7. Through devices, such as the display unit 70, a lamp, and a buzzer, incorporated in the meter panel 13a to notify the driver of information, the display control unit 7 notifies the driver of, for example, the traveling state, the work state, the battery information (e.g., the charge amount and the temperature) in a visual or auditory manner.

Charging of the battery 4 is performed by a charging controller 43 from a power feeding device 45 connected to the charging power connector 44. The charging power connector 44 is provided with a power feeding socket, and the power feeding socket is connected to a power feeding connector of a charging cable from the power feeding device 45 during charging.

The battery 4 is, for example, a lithium ion battery, and includes battery cells 40 serving as low-voltage, small unit cells stacked in multiple layers. The battery state detector 5 configured to detect the battery state includes a battery voltage detector 51 and a battery temperature detector 52. The battery voltage detector 51 can detect, as a cell voltage, the voltages between a plurality of battery cells 40 connected in series. Detection signals of the battery voltage detector 51 and the battery temperature detector 52 are sent to the control unit 6.

The tractor includes, in addition to the battery 4, an electric component battery 41 that supplies electric power to the control unit 6 and other electric components. The electric component battery 41 supplies low-voltage (12-volt) electric power for driving the electric components. The electric component battery 41 is charged by the electric power supplied from the battery 4 via a DC/DC converter 42. The driving of the DC/DC converter 42 is controlled by the control unit 6.

The control unit 6 includes, as functional elements particularly related to the present invention, a battery manager 60, a motor controller 61, a mode setter 62, a start prohibitor 63, and a start prohibition releaser 64.

The control unit 6 can be set to a charging mode to enable charging of the battery 4, and a work mode to enable driving of the electric motor 1. These two modes are set by the mode setter 62.

The start prohibitor 63 prohibits starting of the electric motor 1. The start prohibition releaser 64 releases the prohibition on starting of the start prohibitor 63 by the electric motor 1. For example, in one application example of the prohibition on starting of the electric motor, the start prohibitor 63 prohibits starting of the electric motor 1 after charging of the battery 4 has ended. Accordingly, after the end of charging, the electric motor 1 will not start unless some sort of special operation is performed, thus inhibiting theft of the tractor for which charging has ended. In another application example, in response to detection of the power feeding connector of the charging cable from the power feeding device 45 being inserted to the power feeding socket of the charging power connector 44, the start prohibitor 63 prohibits starting of the electric motor 1. Accordingly, the electric motor 1 will not start while the power feeding connector of the charging cable is inserted to the charging power connector 44. In each case, the prohibition on starting of the electric motor 1 by the prohibitor 63 is released by an operation performed by the driver (manager) using the manual operation device, for example, the start prohibition releaser 64 that has received an acknowledgement signal for an operation into the first operation.

The battery manager 60 manages charging and discharging of the battery 4, for example, based on the cell voltage, the overall inverter voltage, the converter input voltage, and a signal from the key device 34. For example, in response to detection of the power feeding connector of the charging cable from the power feeding device 45 being inserted to the power feeding socket of the charging power connector 44, and detection of the manual operation device being operated from the second operation state to the first operation, the mode setter 62 sets the control unit 6 to the charging mode. More specifically, in response to the power feeding connector of the charging cable being inserted to the charging power connector 44, the control unit 6 enters a charging standby state. In this charging standby state, in response to the control state switcher 35 sending a switching signal (first operation functioning as a charging start instruction) to the control unit 6 through an operation on the key device 34, the control unit 6 enters the charging mode, and a charging program of the charging controller 43 is executed, whereby a charging process of the battery 4 is started. In response to the charging process of the battery 4 having ended, and the control state switcher 35 sending, to the control unit 6, a switching signal (second operation) for switching the control unit 6 to the resting state, the control unit 6 is powered off and enters the resting state. In response to the first operation using the manual operation device being performed during charging, the control unit 6 enters the charging standby state, whereby the charging process is interrupted.

In this embodiment, while the charging cable is inserted to the charging power connector 44, the control unit 6 is switched from the resting state to the operating state through, for example, the first operation using the manual operation device, whereby a charging start instruction is issued and charging is started. At that time, even in a case where the first operation using the manual operation device is performed in order to start charging, it is deemed that some abnormality has occurred in a case where charging of the battery 4 is not started. In order to avoid a secondary problem due to the occurrence of such abnormality, even in a case where a charging start instruction is issued, the control unit 6 may be switched to the resting state to power off the control unit 6 in a case where charging of the battery 4 is not started within a predetermined time after the first operation. Note that another operation method may be used as the operation for starting charging, or another operation device may be used.

The motor controller 61 controls the driving of the electric motor 1. Specifically, based on a signal from the accelerator device 33, the motor controller 61 generates a drive signal for driving the electric motor 1, and provides the signal to the inverter 14.

In the control system, including the control unit 6, installed in the tractor, various processes relating to battery charging and electric motor control can be executed. Such control processes will be listed below.
(1) If the second operation state (OFF state) provided using the manual operation device is maintained when charging of the battery 4 has ended, the control unit 6 is powered off.
(2) If the first operation state (ON state) provided using the manual operation device is maintained when charging of the battery 4 has ended, the control unit 6 is powered off (OFF state) after an elapse of a predetermined time.
(3) Even in a case where a motor start instruction is issued in the work mode to enable traveling control, the control unit 6 is powered off after a predetermined waiting time (e.g., after 5 seconds) in a case where the electric motor 1 does not transition to a starting state.
(4) In a case where the electric motor has stopped due to the occurrence of an error, the control unit 6 is powered off in order to avoid any influence on the control system including the control unit 6 as a core.
(5) In response to the power feeding line from the power feeding device 45 being connected to the charging power connector 44, starting of the electric motor 1 is prohibited. In addition to this, if the electric motor 1 is in the operating state, the electric motor 1 enters a stopped state. The prohibition on starting of the electric motor 1 and the stopped state of the electric motor 1 may also be handled equally.
(6) In a case where the battery state deteriorates, for example, where the battery voltage is reduced or the battery temperature is increased, the output from the electric motor 1 is limited to a preset output limit value.

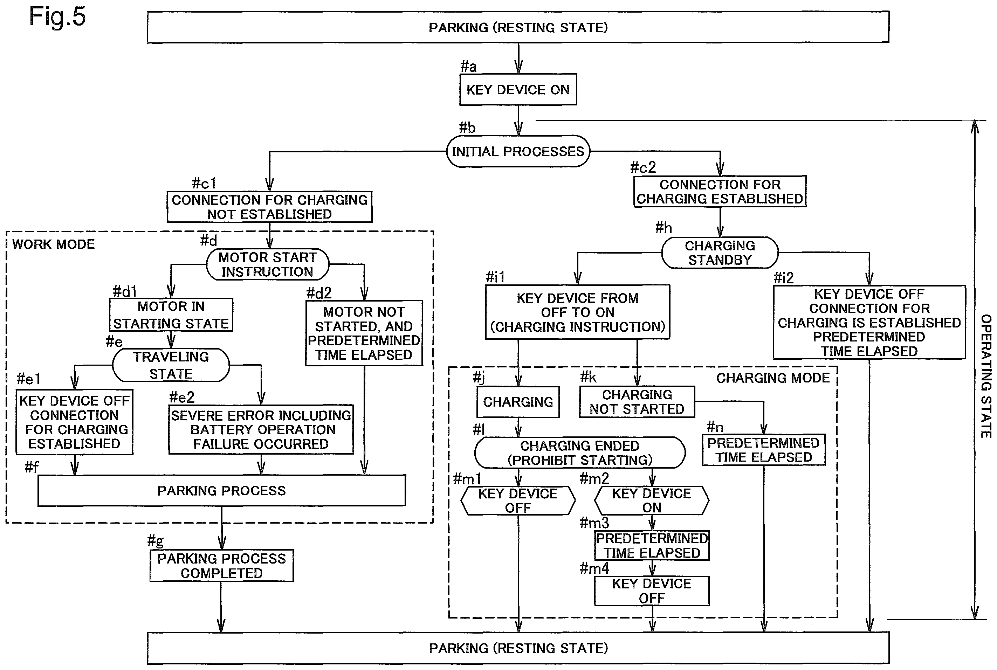

Next, an example of the flow of control performed in the control unit 6 will be described using the chart shown in FIG. 5. In this chart, the state of the control unit 6 is divided into a resting state in which the control unit 6 is powered off, and an operating state in which power is connected to the control unit 6. Furthermore, the operating state is divided into a work mode to enable traveling of the tractor, and a charging mode to enable charging of the battery 4.

The tractor parked in the resting state transitions to the operating state by an ON operation performed on the key device 34 (#a). The ON operation on the key device 34 triggers control by the control unit 6, whereby initial processes of various functions are executed (#b). When the initial processes have ended, whether the system is in a state in which connection for charging is not performed (connection for charging is not established), or a state in which connection for charging is performed (connection for charging is established).

If connection for charging is not established (#c1), the tractor enters the work mode and waits. When a motor start instruction has been issued (#d), whether the motor is in a starting state or a non-starting state is checked. If the motor is in the starting state (#d1), the tractor enters the traveling state (including temporary stopping) (#e). In the traveling state of the tractor, in response to an OFF operation on the key device 34 and connection for charging being detected (#e 1), and in response to the occurrence of a severe error including a battery operation failure (#e2), a parking process (stopping process) (#f) is performed. When the parking process has been completed (#g), the control unit 6 is powered off and enters in the resting state, whereby the tractor enters a parking state. Despite a motor start instruction being issued (#d), in a case where the motor does not enter the starting state after an elapse of a predetermined time (#d2), the procedure proceeds to the parking process (stopping process) (#f), and the system enters the resting state.

After the initial processes (#b) have ended, in response to the charging cable from the power feeding device 45 being connected to the charging power connector 44, the system enters the charging standby state (#h). In the charging standby state, in response to an ON operation being performed on the key device 34 from the OFF operation state, a charging start instruction issued (#i1), and the system enters the charging mode. That is, in order for the system to transition to the charging mode after the charging cable from the power feeding device 45 has been connected to the charging power connector 44, an operation from the OFF operation into the ON operation on the key device 34 needs to be performed.

When the system has transitioned to the charging mode, the charging process of the battery 4 is performed by the charging controller 43 (#j). During the charging process, the control unit 6 is connected to power. When the charging process has ended, the start prohibitor 63 prohibits starting of the electric motor 1 (#l). If the state of operation on the key device 34 is in the OFF operation state (#m 1) at the time when the charging process has ended, the control unit 6 is powered off and enters the resting state, whereby the tractor enters the parking state. If the state of operation on the key device 34 is the ON operation state (#m2) at the time when the charging process has ended, after an elapse of a predetermined time (e.g., after 1 minute) (#m3), the state of operation on the key device 34 is forcibly brought into the OFF operation state (#m4). Thus, the control unit 6 is powered off and enters the resting state, whereby the tractor enters the parking state.

Despite a charging start instruction being issued, if charging is not started (#k), after an elapse of a predetermined time (#n), the control unit 6 is powered off and enters the resting state, whereby the tractor enters the parking state.

In the charging standby state, the state in which connection for charging is not established without the charging cable being connected continues for a predetermined time (e.g., 5 seconds) (#i2) while the key device 34 is in the OFF operation state, the system does not transition to the charging mode, and the control unit 6 is powered off and enters the resting state, whereby the tractor enters the parking state.

If the electric motor 1 is in the driving state at the time when the charging cable from the power feeding device 45 has been connected to the charging power connector 44, the control unit 6 causes the electric motor 1 to enter the stopped state (non-driving state). At that time, the start prohibitor 63 may also function to prohibit starting of the electric motor 1. Of course, the transition to the stopped state (non-driving state) of the electric motor 1, and the prohibition on starting of the electric motor 1 may both be performed by the start prohibitor 63. The stopping and the prohibition on starting of the electric motor 1 can be realized by stopping supply of power to the electric motor 1, but may be realized by stopping the inverter 14.

### Alternative Embodiments

(1) In the above embodiment, the manual operation device of the key device 34 is composed of the operation key 36 configured to be inserted and mounted to the insertion portion 35a, and the switch 35b; however, in place of this configuration, the manual operation device may perform the ON operation and the OFF operation via wireless communication. The key device 34 may be configured in any manner.
(2) The functional blocks of the functional block diagram shown in FIG. 4 may each be divided into a plurality of blocks, or may be configured by a plurality of functional blocks integrated in one piece.

Note that the configurations disclosed in the embodiments described above (including the alternative embodiments; the same applies to the following) are applicable in combination with configurations disclosed in other embodiments so long as no inconsistency arises. The embodiments disclosed herein are illustrative, and embodiments of the present invention are not limited thereto. Appropriate changes and modifications may be made without departing from the scope and sprit of the present invention.

### Industrial Applicability

The present invention is applicable not only to a tractor, but also to various electric work vehicles such as a rice planter, a combine, and a construction machine.

### Description of Reference Signs

1: Electric motor
2: Body frame
3: Driving section
4: Battery
5: Battery state detector
6: Control unit
7: Display control unit
10: Front wheel
11: Rear wheel
12: Cover member
13: Front panel
13a: Meter panel
14: Inverter
15: Hydrostatic continuously variable transmission device
15a: Hydraulic pump
15b: Hydraulic motor
16: Transmission
17: Mid PTO shaft
18: Rear PTO shaft
19: Mowing device
30: Protection frame
31: Driver's seat
32: Steering wheel
33: Accelerator device
34: Key device
35: Control state switcher
35a: Insertion portion
35b: Switch
36: Operation key
40: Battery cell
41: Electric component battery
42: DC/DC converter
43: Charging controller
44: Charging power connector
45: Power feeding device
51: Battery voltage detector
52: Battery temperature detector
60: Battery manager
61: Motor controller
62: Mode setter
63: Start prohibitor
64: Start prohibition releaser
70: Display unit

## Claims

1. An electric work vehicle configured to be driven by power of an electric motor powered from a chargeable battery, the electric work vehicle comprising:
a control unit configured to control the electric work vehicle;
a control state switcher configured to switch the control unit to an operating state in response to a first operation on a manual operation device, and switch the control unit to a resting state in response to a second operation on the manual operation device;
a charging power connector configured to receive charging power to be supplied to the battery; and
a charging controller configured to control charging of the battery with the charging power, wherein
the control unit includes:
a motor controller configured to control driving of the electric motor;
a mode setter configured to set a charging mode to enable charging of the battery, and a work mode to enable driving of the electric motor;
a start prohibitor configured to prohibit starting of the electric motor after charging has ended; and
a start prohibition releaser configured to release the prohibition on starting of the electric motor.

2. The electric work vehicle according to claim 1, wherein the prohibition on starting by the start prohibitor is released by an operation into the first operation on the manual operation device.

3. The electric work vehicle according to claim 1 or 2, wherein the control unit is powered off in a case where charging of the battery is not started within a predetermined time after a charging start instruction has been provided during the charging mode.

4. The electric work vehicle according to any one of claims 1 to 3, wherein the control unit is powered off in a case where a state of the second operation using the manual operation device is maintained after charging of the battery has ended.

5. The electric work vehicle according to any one of claims 1 to 4, wherein the control unit is powered off after an elapse of a predetermined time in a case where a state of the first operation using the manual operation device is maintained after charging of the battery has ended.

6. The electric work vehicle according to any one of claims 1 to 5, wherein the control unit is powered off after an elapse of a predetermined waiting time in a case where the electric motor does not transition to a starting state after a motor start instruction has been provided in the work mode.

7. The electric work vehicle according to any one of claims 1 to 6, wherein the control unit is powered off in a case where the electric motor is stopped due to occurrence of an error.

8. The electric work vehicle according to any one of claims 1 to 7, wherein the control unit causes the electric motor to enter a stopped state in response to a power feeding line from a power feeding device being connected to the charging power connector.

9. The electric work vehicle according to any one of claims 1 to 8, wherein the charging mode is set by the charging power connector being connected for charging, and the manual operation device being operated from a state of the second operation into the first operation.
